Europäisches Patentamt

European Patent Office

Office européen des brevets

(11) Publication number: **0 455 333 A2**

# EUROPEAN PATENT APPLICATION

(21) Application number: **91302206.7**

(22) Date of filing: **14.03.91**

(51) Int. Cl.5: **G01N 1/14, G01N 30/06**

(30) Priority: **30.03.90 FR 9004561**

(43) Date of publication of application:
**06.11.91 Bulletin 91/45**

(84) Designated Contracting States:
**BE DE FR GB**

(71) Applicant: **BP Chemicals Limited**
**Belgrave House 76 Buckingham Palace Road**
**London, SW1W 0SU(GB)**

(84) **BE DE GB**

Applicant: **BP CHEMICALS S.N.C.**
**Tour Neptune la Defense 1, 20, Place de**
**Seine**

**F-92400 Courbevoie(FR)**

(84) **FR**

(72) Inventor: **Dubois, Louis**
**Les Iris, 3 rue Amavet**
**F-13500 Martigues(FR)**
Inventor: **Lyonnet, Serge**
**686 Vallon de Graffiane**
**F-13820 Ensues-la-Redonne(FR)**

(74) Representative: **Denbigh, Keith Warwick et al**
**BP INTERNATIONAL LIMITED Patents &**
**Agreements Division Chertsey Road**
**Sunbury-on-Thames Middlesex, TW16**
**7LN(GB)**

(54) **Liquid sampling process and apparatus.**

(57) The invention relates to a process for sampling the liquid phase in a suspension of solid particles in a liquid phase. The process comprises a suction phase in which a sample of the suspension is passed through a filtration means retaining the solid particles and allowing the liquid phase to pass into a sampling chamber, and then a return-flow phase in which part of the liquid phase in the chamber is returned to the suspension by being passed back through the filtration means, and simultaneously an-other part of the liquid phase in the chamber is discharged for analysis. The invention also relates to an apparatus comprising an enclosed sampling chamber (12) having a porous wall (3), a movable wall (7), e.g. a piston, capable of sealable movement allowing the volume of the chamber to change, and a discharge orifice (14) from said chamber allowing the liquid phase in said chamber to be passed externally into a discharge tube for analysis.

FIG.1

EP 0 455 333 A2

The subject of the present invention is a process and an apparatus for sampling a liquid phase from a suspension of solid particles in said liquid phase.

Many industrial processes are concerned with a suspension of solid particles in a liquid phase, for example in the field of chemical reactions, preparations of catalysts, agricultural food products, pharmaceutical products, fermentation products or microorganisms. The suspensions are often subjected to physico-chemical reactions which have to be controlled. The progress of reactions taking place within the suspensions is usually controlled by monitoring physical parameters of the suspension, such as temperature, pressure, etc. These monitorings are sometimes carried out continuously by connecting the sensors for the physical parameters to an electronic measurement and alarm system.

For suspensions in which chemical reactions are in progress, physico-chemical analyses of the suspension are generally conducted by sampling. The sampling may be generally carried out manually by drawing off a sample of the suspension; this drawing off is carried out by passing the sample from inside the vessel in which the suspension is contained towards the outside, generally at ambient atmosphere, via a drawing-off orifice; the sample is collected in a container and is then analysed, if appropriate after separation of the liquid and solid phases. The suspension can be passed from inside the vessel to the outside by gravity or under the action of the overpressure prevailing in the vessel or by suction or by mechanical drawing off with a syringe, pump, etc.

One problem with sampling of suspensions is the need to separate the solid from the liquid before the latter can be analyzed and the tendency for the filtration means used for separation to clog in use, resulting in frequent involvement of an operation to replace, clean or unclog this separation or filtration means.

In many instances, these manual operations are dangerous or at the very least complex or difficult. In fact, in many cases, the suspension or one of its solid or liquid phases changes as a result of contact with the ambient atmosphere, as a result of the difference in the physical conditions during the passage from inside the vessel to the outside, or as a result of immediate reactions of all or a part of the suspension with the ambient atmosphere; these changes or reactions are, for example, the evaporation of a liquid phase as a result of a pressure drop, or the oxidation or combustion of the solid particles in the presence of oxygen contained in the air.

In the preparation of catalysts of the Ziegler-Natta type used for polymerisation of olefins comprising especially a magnesium chloride in suspension in a liquid hydrocarbon, magnesium metal in suspension in a liquid hydrocarbon can be reacted with a chloride. The suspension may be sampled manually in order to conduct physico-chemical analyses of the liquid phase, especially by gas-chromatography. This sampling may be very difficult because of the risk of quick combustion of compounds such as magnesium metal powder used for preparing the magnesium chloride; moreover, the sampling may cause losses of the liquid phase to be analysed and of the solid particles in suspension. Furthermore, this method requires the subsequent separation of the phases before analysis of the liquid can occur, thus making it difficult to automate the sampling operation.

One of the problems is to take as small a sample as possible of the liquid phase within a suspension, in order to carry out an analysis of the sample of this liquid. The sampled volume is appropriate to the type of analysis to be carried out. In the particular case of an analysis conducted by gas chromatography, the sampling of a microlitre can be sufficient. One of the problems is to avoid taking too large a volume of sample and to avoid disturbing the reaction which takes place in the suspension medium, as it is this reaction which is exactly followed by analyses on frequent samplings. Each sampling corresponds to a particular quantity of reagents extracted from the reaction medium, this quantity being lost unless it can be recycled.

The present invention provides a process for sampling the liquid phase in a suspension of solid particles in a liquid phase, characterised in that:

(a) in a suction phase taking place during a suction time (T1) a sample of the suspension is passed through a filtration means which retains the solid particles and allows the said liquid phase to pass into a sampling chamber, and then

(b) in a return-flow phase taking place during a return-flow time (T2):

- part of the liquid phase in the said chamber is returned to the said suspension by being passed back through the said filtration means, so that the said liquid phase carries with it into said suspension the said solid particles retained by the said filtration means, and

- simultaneously during a discharge time (T3) which is at most equal to the said return-flow time (T2), another part of the said liquid phase in said chamber is discharged for analysis.

In a preferred embodiment, when cycles comprising the said suction and return-flow phases are carried out in succession, at least two cycles of said suction and return-flow are separated by a renewal cycle comprising the suction phase (a) and a modified return-flow phase in which substantially none of the liquid phase in the sampling chamber is discharged for analysis. Thus in the renewal cycles preferably uniformly spaced, the discharge time (T3) is given a zero value, so that the liquid phase in the sampling chamber at the end of the cycle preceding the said renewal cycle is thereby renewed, and so that in the cycles following the said renewal cycle a more representative sample of the said liquid phase is obtained.

Generally, the ratio between the suction time (T1) and the return-flow time (T2) is at least equal to 1, preferably from 1.5 to 20, especially from 2 to 20, e.g. 3 to 10.

The present invention also provides an apparatus for sampling a liquid phase from a suspension of solid particles in said liquid phase comprising an enclosed sampling chamber (12) having a porous wall (3), a movable wall (7) capable of sealable movement allowing the volume of said chamber to change, and a discharge orifice (14) from said chamber allowing the liquid phase contained in said chamber to be passed externally into a discharge tube for analysis. In particular, the sampling chamber (12) which is preferably a cylindrical chamber, e.g. a tube, comprises a non-porous side wall (5), the porous wall (3) and the movable wall (7) which is preferably a piston sealingly movable in the said sampling chamber. The piston (7) may be actuated by a rod (8), itself driven in translational motion by drive means (32). The apparatus possesses connection means which may communicate the said sampling chamber via the discharge orifice (14) and the discharge tube with an analysis equipment for analysing the said samples, e.g. a gas-phse chromotagraph or a pH-meter. A part of the discharged liquid phase may be injected at the entrance of the analysis apparatus, e.g. a gas-phase chromoatograph and the excess of said liquid phase may be returned to the suspension.

Advantageously, an apparatus according to the invention may be such that the said discharge orifice (14) is located on the front face (31) of the said piston (7) and is connected to the discharge tube by an internal tube (6) which passes longitudinally through the said piston.

In a preferred embodiment of the apparatus according to the invention, the mean diameter of the pores of the porous wall (3) may be smaller than or equal to the largest diameter of the smallest particles of the said suspension which are at most 0.5%, preferably at most 0.2% by weight of the total weight of the particles.

One of the main benefits of the invention is to be able to provide a process and an apparatus which are especially designed for following the progress of a reaction in a suspension, particularly when this suspension comprises a corrosive, toxic, inflammable, explosive or sterile medium, under a pressure and at a temperature which can vary within a wide range.

The process and the apparatus according to the invention make it possible to avoid carrying out dangerous operations of taking samples of which mere contact with the air or the human body could produce harmful effects.

It makes it possible to automate these operations and improve the safety of the installation.

One object of the invention is to provide an apparatus and a process for sampling the clarified liquid phase in a suspension of solid particles in a liquid phase, which make it possible to deliver the samples taken directly to a physico-chemical analysis apparatus, without the need for handling by an operator. It is therefore an object of the invention to provide an apparatus and a process for measuring or testing the chemical, biochemical and physical properties of the liquid phase existing in suspension media, and particularly to an apparatus and a process for continuously or semi-continuously monitoring the same within a catalyst preparation vessel.

Another object of the invention is to avoid bringing the samples taken into contact with an atmosphere external to the vessel containing the suspension, the said contact being liable to generate, modify or cancel physico-chemical reactions within the suspension, moreover these reactions can be dangerous and falsify the results of the analyses.

Another object is to reduce losses of the solid particles and the liquid phase of the suspension.

A final object of the invention is to carry out the samplings either in the immediate vicinity of the wall of the vessel or in a region remote from this wall, or any previously selected intermediate zone, by means of a simple adjustment.

The present invention is illustrated in and described with the reference to the accompanying drawings showing preferred embodiments of an apparatus according to the invention and explain the principle operations of a process according to the invention.

Figure 1 shows diagrammatically in part cross section a sampling apparatus according to the invention in use in a position corresponding to the suction phase of the process according to the invention.

Figure 2 shows diagrammatically the same apparatus as in Figure 1, but in a position corresponding to the return-flow phase of the same process.

Figure 3 is a histogram showing the principle operations of a process according to the invention.

Figure 4 is a histogram on a different scale, showing the principle operations in a preferred process according to the invention.

Figure 5 shows in cross section a particular embodiment of an apparatus according to the invention.

Figure 6 shows, on an enlarged scale, a detail of an embodiment of an apparatus according to the invention.

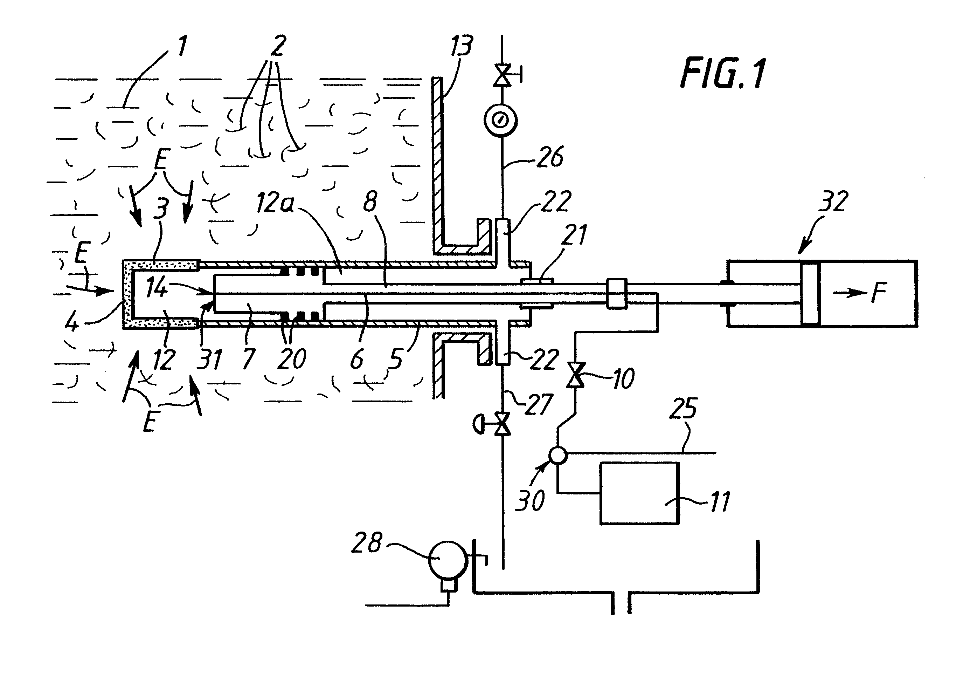

The apparatus and its methods of use which are shown in Figures 1 to 6 are especially designed for sampling within a suspension consisting of a catalyst used for the polymerisation of ethylene and will be described with reference to the sampling apparatus.

Thus the apparatus and method can be employed in order to follow the progress of the preparation of a catalyst of the Ziegler-Natta type based on titanium and magnesium, as described in French Patents FR 2,116,698 and FR 2,099,311. The catalyst preparation comprises reacting at 80°C in a liquid hydrocarbon medium, such as n-hexane, a magnesium metal powder with titanium tetrachloride, n-propyl titanate and n-butyl chloride. Regular samplings of the liquid phase over a period of time make it possible, by means of a gas chromatography apparatus, to observe the disappearance of the n-butyl chloride which reacts in particular with the magnesium. The suspension medium is both extremely inflammable (liquid hydrocarbon, magnesium metal powder) and corrosive (titanium tetrachloride). The apparatus and process according to the invention are highly suitable for this type of reaction.

Figure 1 partially illustrates a vessel (13) which can be a reactor, a reservoir or a pipeline and which contains a suspension of solid particles (2) in a liquid phase (1). In the particular instance of the preparation of a solid catalyst, samples of the liquid phase alone are to be taken from the vessel (13) for the purpose of analysis and are evaporated in the injector (30) located at the entrance of the analysis apparatus (11) which comprises a gas-phase chromatograph.

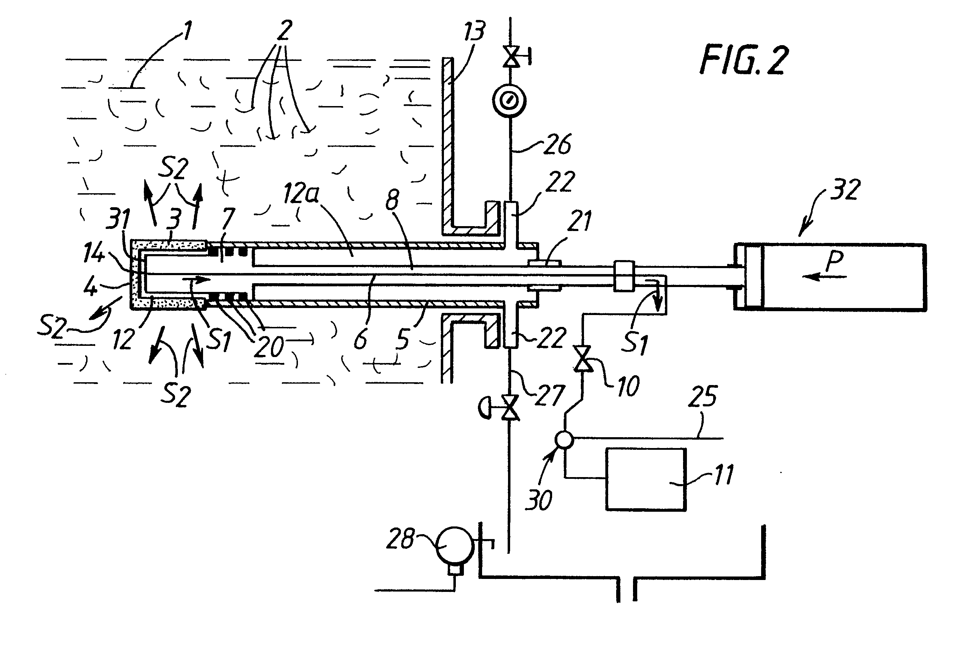

Figures 1 and 2 show diagrammatically the main components of an apparatus according to the invention which comprises a cylindrical sampling chamber (12) which is defined by a non-porous tube (5), an end (4), a tube with a porous wall (3) and a piston (7).

The said tubes (3), (5) and the said end (4) are connected rigidly to the said vessel (13) by means not shown.

In the Figures 1 and 2, the piston (7) is connected to a rod (8) which is driven in an alternating translational movement by drive means (32), which may consist of an electrical or pneumatic or hydraulic jack or any other known means. The sampling chamber (12) is connected to an analysis apparatus (11), for example a chromatograph, by way of connection means comprising a discharge tube, such as an internal tube (6) in the piston (7), via a discharge orifice (14).

In the preferred embodiment illustrated in Figures 1 and 2, the discharge orifice (14) is located on the front face (31) of the said piston (7). The said connection means consist of a tube (6) and of a valve (10), which can be manually or electrically controlled. The piston (7) is equipped on its periphery with a sealing device (20). The tube (5) also defines an auxiliary chamber (12a) which is located inside the said tube and is defined by the back face of the piston (7), the non-porous side wall of the tube (5) and a gasket (21) at the end of said tube. The auxiliary chamber (12a) communicates by way of connecting means (22) with inlet (26) and outlet (27) conduits.

Figure 1 illustrates the apparatus in a position corresponding to the suction phase of the process. The piston (7) is driven by the rod (8) which is subjected to a pulling force F tending to move the said piston (7) away from the end (4), thereby increasing the volume of the said chamber (12); a vacuum is thus generated in the sampling chamber (12) relative to the interior of the vessel (13), so that the suspension is sucked towards the chamber (12), as indicated by the arrows E, and the liquid phase of the suspension passes through the porous wall (3).

The size of the pores of the wall (3) is such that it prevents the passage into the chamber 12 of the solid particles (2) in suspension in the liquid phase (1), and therefore the said liquid phase alone penetrates into the sampling chamber (12); the porous wall (3) thus performs the function of a phase separating filtration means.

During the suction operation, the valve (10) is kept closed. The mean size of the pores of the porous wall (3) depends on the mean size of the particles of the suspension. In particular, the pores of the porous wall (3) may have a mean diameter equal to or smaller than the largest diameter of the smallest particles of the suspension which constitute at most 0.5%, preferably at most 0.2% by weight of the total weight of particles. Thus, the maximum pore size can be such that more than 99.5 % by weight, preferably more than 99.8 % by weight of the particles of the suspension cannot penetrate into the pores. The pore size cannot be too small, because in this case the porous wall (3) would have too high a pressure drop, and this would make the return flow more difficult and would result in a less effective unclogging. The pore size is selected so as to prevent the clogging of the inner part of the porous wall (3) which could easily cause the complete blockage of the apparatus.

When the liquid phase is being sucked into the sampling chamber (12), most of the particles in suspension are stopped immediately at the entrance of the pores of the outer face of the porous wall (3) in contact with the suspension and, on the said outer face, form a layer which itself has a filtering effect.

The smallest particles can penetrate into the pores, but cannot pass completely through the said porous wall (3), in view of the thickness of the latter and of the speed of movement of the small particles driven by the liquid through these pores.

Figure 2 illustrates an apparatus according to the invention identical to that shown in Figure 1, but in a position corresponding to the return-flow phase of the process according to the invention. In this figure, the diagrammatic representations of the main components of the apparatus are identical to those of Figure 1 and bear the same references. In the return-flow phase, the piston (7) is driven by the rod (8) which is subjected to a force represented by the arrow P, the said piston approaching the end (4) and reducing the volume of the sampling chamber (12) and thus generating there an overpressure in relation to the vessel (13); consequently, some of the liquid phase (1) previously contained in the sampling chamber (12) passes through the porous wall (3) and penetrates into the vessel (13), as indicated by the arrows S2. During the return-flow phase, the valve (10) can be opened, so that part of the sample of the liquid phase contained in the sampling chamber (12) is discharged via the discharge orifice (14) and then driven towards the analysis apparatus (11), passing via the connection means (6), the valve (10) and the injector (30). During the discharge operation corresponding to the opening time of the valve (10), which provides the sample of the liquid phase to be transported towards the analysis apparatus (11), any excess of the sample taken which is not used for analysis, can be conveyed via the rejection pipe (25) towards rejection or recycling means to the suspension in the vessel (13).

During the return-flow phase, the liquid phase in the sampling chamber (12) passes again through the pores of the porous wall (3) in a reverse flow at such a pressure and speed that the small particles are expelled from the pores and the layer of particles formed on the outer surface of the said porous wall (3) during the suction phase is put back into the suspension in the vessel (13).

Advantageously, the speed of movement of the piston (7) in the tube (5) during the return-flow phase is higher than the speed of movement of the piston in the cylinder during the suction phase, and correspondingly the return-flow time (T2) corresponding to the return-flow phase is shorter than the suction time (T1) corresponding to the suction phase.

Advantageously, with regard to an apparatus according to the invention intended for taking samples from a catalyst suspension of the Ziegler-Natta type, the pores of the porous wall (3) have a mean diameter approximately from 3 to 13 microns, preferably 5 to 10 microns. So that the porous wall (3) withstands the return-flow overpressure and the suction vacuum, the material forming the porous wall (3) is preferably selected from known sintered metals or ceramic materials, for example a stainless steel or bronze, or polymeric materials such as polypropylene. The porous wall (3) can have a thickness of approximately 1 to 5 mm. The mean diameter of the pores of the porous wall and the thickness of the porous wall (3) are selected so as to bring about a pressure drop compatible with the suction time (T1) and return-flow time (T2) and with the power available for driving the piston (7).

Advantageously, the moment of opening of the valve (10) during the return-flow phase corresponding to the start of the discharge operation and the moment of closing of the valve (10) corresponding to the end of the discharge operation are selected so as to provide a sufficient sample to be transported during the discharge phase from the sampling chamber (12) to the injector (30) located at the entrance of the analysis apparatus (11).

Figures 1 and 2 show the discharge orifice (14) on the front face (31) of the piston (7); this orifice could also be located on the porous wall (3), the non-porous side wall of tube (5) or on the end (4), provided that it always remains in fluid contact with the liquid in the chamber (12) during the movements of the piston; nevertheless, locating the orifice (14) on the front face of the piston reduces the necessary number of sealing barriers e.g. in the vessel (13).

Figures 1 and 2 also show the end (4) as being porous like the porous wall (3); however, the end (4) can be non-porous.

It is desirable that there should be an axial space and an radial space respectively between the end (4) and the front face of the piston (7) as well as between the outside diameter of the piston (7) and the inside diameter of the porous wall (3), thereby preventing the erosion of the inner face of the porous wall (3) and possible impacts of the front face of the piston (7) against the end (4).

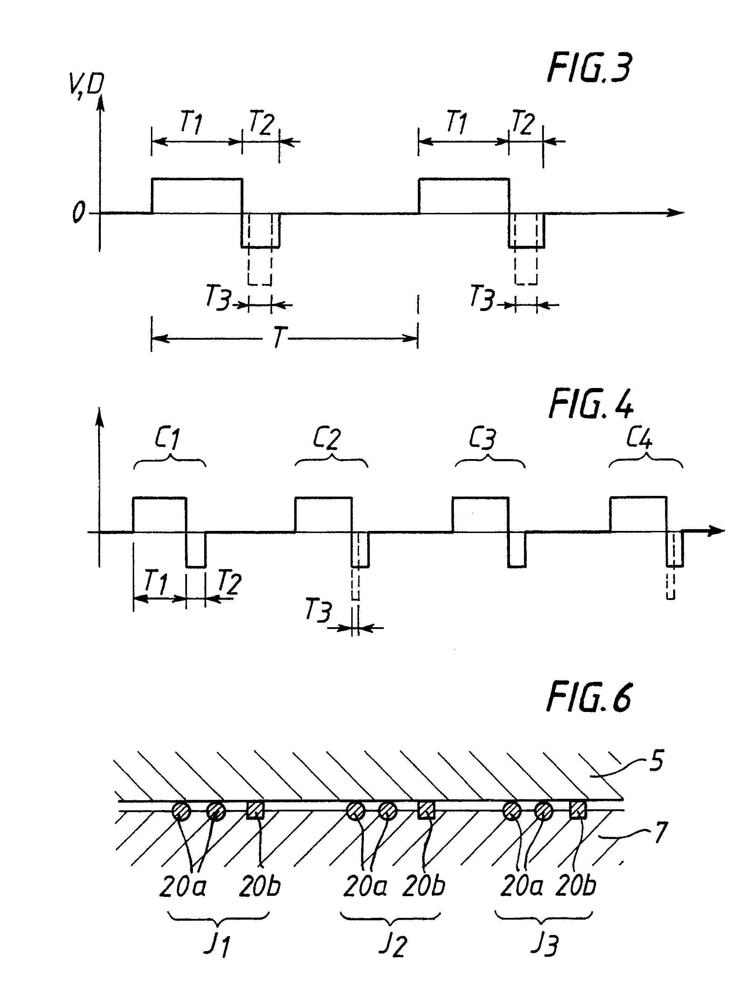

Figure 3 shows a histogram representing the position and speed of movement of the piston (7) in the tube (5) as a thick line. The abscissa axis represents the time; the ordinate axis represents the movement (D) or speed (V) of the piston (7). The speed of movement of the piston or the movement are counted with positive values when the said piston moves away from the end (4), that is to say during the suction phase; Figure 3 shows a suction phase lasting a time (T1). Subsequently, a return-flow phase is carried out, taking place during the time (T2) while the speed of movement of the piston or the movement are shown in Figure 3 as having negative values.

Figure 3 shows as broken lines a histogram corresponding to the opening of the valve 10. The opening time (T3) of the valve (10), corresponding to the operation of discharging the sample from the sampling chamber (12) towards the analysis apparatus (11), is located within the return-flow phase, specifically as shown in Figure 3, with the opening of the said valve 10 located after the start of the return-flow phase and the closing of the valve (10) corresponding to the end of the discharge operation occuring before the end of the return-flow phase.

Figure 3 shows that the cycles comprising a suction phase and a return-flow phase of a process according to the invention are executed regularly at time intervals (T) corresponding to the desired frequency for the requirements of the analysis of the samples.

Figure 4 illustrates, according to a preferred process according to the invention, a histogram of the movement or speed of movement of the piston according to the same conventional representations as in Figure 3; however, the scale of the abscissa axis representing the time is different.

Figure 4 shows four successive cycles designated by C1, C2, C3 and C4, each of the cycles comprising the suction phase taking the time (T1) followed by a return-flow phase taking the time (T2). The cycles C2 and C4 include the discharge operation represented by the broken lines and taking place during the returnflow phase; the cycles C1 and C3 do not include the discharge operation.

In a preferred process according to the invention, cycles comprising the suction and return-flow phases are carried out in succession, and in uniformly spaced renewal cycles C1 and C3 the discharge time (T3) is thereby renewing the liquid liable to have remained in the sampling chamber (12) at the end of the cycle preceding the renewal cycle, and thus ensuring that in the cycles C2 and C4 respectively following the renewal cycles C1 and C3 a more representative sample of the liquid phase is obtained.

The ratio between the suction time (T1) and the return-flow time (T2) is generally at least equal to 2, preferably 3 to 20, e.g. 4 to 10.

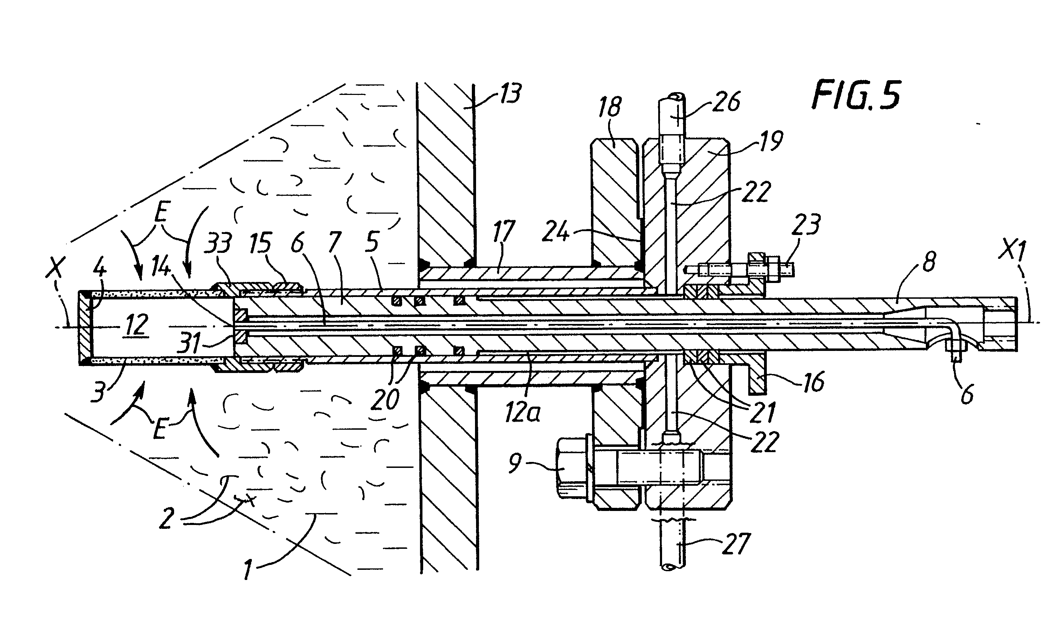

Figure 5 illustrates a preferred embodiment of an apparatus according to the invention for sampling the liquid phase in a suspension of solid particles (2) in a liquid phase (1). The apparatus comprises a cylindrical sampling chamber (12) defined by porous walls (3), (33), an end (4) and the front face (31) of the piston (7). The wall (3) is porous, in contrast to the other walls delimiting the said chamber. The walls (3) and (33) and the end (4) are connected rigidly to one another and form a separating filter block which is mounted on a tube (5) by screwing by way of a collar (33) internally threaded and the tube (5) externally threaded. Before the block formed by the walls (3), (33) and the end (4) is mounted on the tube (5), a nut (15) is advantageously screwed onto the tube (5), so that it forms with the collar a nut/locknut assembly making it possible to immobilise the block in a predetermined position on the tube (5), so that the final distance between the sampling chamber and the wall of the vessel (13) can thus be set before the mounting operation.

The suspension contained inside the vessel (13) is located on the left of the wall of the vessel (13) in Figure 5. Welded to this wall of the vessel (13) is a tube (17) to which a fixed flange (18) is welded; a removable flange (19) is mounted on this fixed flange (18) by means of screws (9) or by any other equivalent means; a gasket (24) is inserted and gripped between the fixed flange (18) and the removable flange (19).

The tube (5) is welded to the removable flange (19) in such a way that the former is connected rigidly to the wall of the vessel (13) by means of the flanges (18) and (19) and the tube (17), whilst at the same time allowing it to be dismounted easily.

The tube (5) has a bore which is preferably obtained by grinding and in which the piston (7) can slide; in fact, this piston has an outside diameter only slightly smaller than the diameter of the bore of the tube (5) over at least some of its length; advantageously, this piston is likewise ground on its outside diameter, in order to guarantee that the piston (7) will slide in the tube (5) along their common axis $(XX_1)$ with a miminum of friction, whilst at the same time leaving a small diametral space between the piston (7) and the tube (5).

The removable flange (19) is equipped with a bore which extends the bore of the tube (5), to allow the passage and sliding of the rod (8) arranged as the extension of the piston (7). The piston is equipped at its periphery, if desired, in the vinicity of its front face (31) located in the sampling chamber (12), with at least one groove, in which is placed at least one O-ring (20) or any other equivalent sealing means.

The piston (7) is internally bored, so as to introduce there an internal tube (6) which is welded at one of its ends to the front face (31) of piston (7), with the result that the internal tube (6) communicates with the chamber (12) via the discharge orifice (14). Advantageously, the internal tube (6) and the discharge orifice (14) are centred on the axis (XX₁) common to the piston (7) and the tube (5).

In a preferred embodiment, the internal tube (6) is bent at its other end and equipped with a connector (not shown), so that it can be extended by another tube (not shown) which can be flexible and which is itself connected to the analysis apparatus (11), if appropriate by way of a valve (10) and an injector (30), as described in Figures 1 and 2.

Advantageously, the inside diameter of the walls (3), (33) of the removable separating filter block is substantially larger by some tenths of a millimetre than the outside diameter of the piston (7), so that the piston can slide within the tube formed by these walls (3), (33), without risk of contact with these and without any special precaution for the centring of the tubes (3), (33) in relation to the tube (5) which is obtained as a result of the screwed mounting between the collar (33) and the tube (5).

In a preferred embodiment of the invention, the apparatus possesses at least one gasket (21) which isolates an auxiliary chamber (12a) contained between the back face of the piston (7), the tube non-porous (5) and the rod (8) from the outside environment; this gasket (21) is seated in a bore made in the removable flange (19) and is retained by a gland (16), itself fastened to the flange (19) by means (23), such as at least one screw or bolt.

Advantageously, the flange (19) is equipped with two radial connecting means (22) terminating, in their part located on the periphery of the flange (19), in a threaded zone which makes it possible to connect the inlet and outlet conduits (26) and (27) in which a scavenging gas can pass.

Advantageously, the part of the piston (7) ensuring sealing with the non porous tube (5) comprises one or more sets of sealing means (20). These are in contact only with the inner face of the tube (5) and preferably not with that of the porous wall (3). During normal operation, the auxiliary chamber (12a) located behind the back face of the the piston (7) is free of liquid or of particles obtained from the suspension. However, so that any leakage of the sealing system (20) can be detected, there can advantageously be provided the admission into the auxiliary chamber (12a) of an inert scavenging gas, such as nitrogen, entering via the inlet conduit (26) and the connecting means (22), circulating in a continuous flow and leaving the auxiliary chamber (12a) again via another connecting means (22) and the outlet conduit (27).

Figures 1 and 2 show connecting means (22) and conduits (26) and (27) and also show a detector (28) which can be installed on the conduit (27) and bring about the closing of a valve and the isolation and shutdown of the sampling apparatus.

Figure 6 illustrates a preferred embodiment of the said sealing device (20).

In fact, because microfine particles can pass through the said porous wall (3) and enter the sampling chamber (12) and because the sucked-in liquid can be extremely corrosive and under a high pressure, it is important to ensure excellent sealing between the sampling chamber (12) and the auxiliary chamber (12a) located behind the back face of the piston and where the rod (8) causing the movement of the piston passes.

The sealing is preferably ensured by two or three sets of sealing means.

Figure 6 illustrates three sets J1, J2 and J3. Each set comprises: two O-rings (20a) selected from an elastic material and a scraper ring (20b) of square or rectangular cross-section and made of a material of the Teflon type. The function of the scraper ring (20b) is to guide the piston (7) and scrape the inner face of the tube (5), in order to eliminate any deposit of liquid and, above all, of microfine particles. The two O-rings (20a) are located in the vicinity of the chamber (12), whilst the scraper ring (20b) is farther away from this.

It is recommended to have at least two sets of O-rings and scraper rings (20b), since the first set J1 located in the vicinity of the chamber (12) is directly in contact with the sucked-in liquid and the farther second set J2 functions in a zone not contaminated by the sucked-in liquid and ensures that the sealing system of the apparatus has an increased lifetime.

The apparatus and the process of the present invention can be used in the industrial preparation of chemicals, pharmaceutical products, fermentation products, microorganisms, food products involving the presence of a suspension of solid particles in a liquid phase. Particularly they can be used in the preparation of solid catalysts, such as Ziegler-Natta solid catalysts used for polymerizing olefins. They are adapted to continuously or semi-continuously monitor the chemistry of a suspension medium such as a catalyst suspension during the preparation of the catalyst.

The invention is illustrated in the following Example.

Example

Into a stainless-steel vessel having a capacity of 9 m³, equipped with a stirrer system rotating at 190 revolutions per minute and with a heating and cooling device, were introduced successively under a nitrogen atmosphere, at 20°C, 4500 litres of n-hexane, 5 kg of iodine and 70 kg of a magnesium metal powder having a mean-mass diameter of 56 microns. The smallest particles of magnesium which form 0.2% by weight of the total weight of magnesium, had a diameter at most equal to 5 microns. The reaction mixture was heated to 80°C, and introduced into it under a pressure of approximately 0.2 MPa were first, quickly, 364 moles of titanium tetrachloride and 367 moles of n-propyl titanate, and then, slowly, within four hours, 4200 moles of n-butyl chloride. After this time, the mixture was kept for two hours under stirring at 80°C, and a solid catalyst of the Ziegler-Natta type in suspension in the n-hexane was obtained. Installed on the lateral wall of the lower part of the vessel was an apparatus, as illustrated diagrammatically in Figure 1, intended for sampling the liquid phase of the suspension contained in the vessel.

The apparatus comprised:
- a stainless-steel cylindrical tube (5) with a length of 400 mm and an inside diameter of 26.2 mm;
- a porous tube (3) arranged in the extension of the tube (5) and closed at its end and with a length of 60 mm, an inside diameter of 27 mm and a thickness of 2 mm, the porous tube (3) being made of "PORAL" Registered Trade Mark sintered metal (alloy Z2 CND 12.17), the mean pore diameter of which was 5 microns;
- a stainless-steel cylindrical piston (7) with a length of 105 mm and an outside diameter of 26 mm and comprising a front face (31) with a length of 65 mm and a rear part with a length of 40 mm equipped with three sets of sealing means, each set comprising two O-rings (20a) made of rubber or preferably "KALREZ" Registered Trade Mark (sold by DU PONT DE NEMOURS - U.S.A.) and a scraper ring (20b) made of Teflon;
- a rod (8) of the piston (7) with a length of 530 mm and an outside diameter of 26 mm.

The piston (7) and the rod (8) were pierced in their central axis with a hole having a diameter of 6 mm, in which was arranged a stainless-steel flow tube (6) with an inside diameter of 1 mm and an outside diameter of 2 mm, one of the ends of this tube consisting of the orifice (14) being fitted to the front face (31) of the piston (7) so as to ensure sealing between the chamber (12) and the hole made inside the piston and the rod, the other end of the tube coming out of and projecting from the rod (8) outside the tube (5), after forming an angle of 90° inside the rod (8), and being connected directly to a valve (10). The latter communicated with an injector which, of the total quantity (10 ml) of liquid passing through the tube (6) during the discharge operation, delivered a volume of 1 microlitre towards a gas-chromatography apparatus (Carlo-Erba) intended for determining the concentration of n-butyl chloride in the liquid of the suspension, the excess sample being rejected via the pipeline (25). Advantageously, the excess sample was kept isolated from any active medium, so that the said excess could be reused.

The operation was conducted according to the process described above, with a sampling carried out once every ten minutes during the four hours of the introduction of the n-butyl chloride into the reactor and the two hours of agitation at 80°C which followed.

For each sampling, the process involved a suction and a return flow with the valve (10) closed, then again a suction with the valve (10) closed and a return flow during which the valve (10) was open. The suction time (T1) was 6 seconds and the return-flow time (T2) was 3 seconds, the discharge time (T3) being 1 second. The total duration of the sampling was approximately 24 seconds. At each actuation of the piston, the latter moved over a distance of 200 mm. The ratio between the volume of liquid returned through the porous tube (3) and that discharged via the discharge orifice (14) was equal to approximately 10.

## Claims

1. Process for sampling the liquid phase in a suspension of solid particles in a liquid phase, characterised in that,

   (a) in a suction phase taking place during a suction time (T1) a sample of the suspension is passed through a filtration means which retains the solid particles and allows the said liquid phase to pass into a sampling chamber, and then

   (b) in a return-flow phase taking place during a return-flow time (T2):
   - part of the liquid phase in the said sampling chamber is returned to the said suspension by being passed back through the said filtration means, so that the said liquid phase carries with it into said suspension the said solid particles retained by the said filtration means, and
   - simultaneously during a discharge time (T3) which is at most equal to the said return-flow time (T2), another part of the said liquid phase in said chamber is discharged for analysis.

2. Process according to Claim 1, characterised in that at least two cycles of said suction and return-flow phases are separated by a renewal cycle comprising the suction phase (a) and a modified return-flow phase in which substantially none of the liquid phase in the sampling chamber is discharged for analysis.

3. Process according to Claim 1 or 2, characterised in that the ratio between the said suction time (T1) and the said return-flow time (T2) is at least equal to 1, preferably 1.5 to 20.

4. Process according to any of Claims 1 to 3, characterised in that the liquid phase discharged from the sampling chamber is analyzed in a gas-phase chromatograph, and in that a part of the said discharged liquid phase is injected at the entrance of the said chromatograph, and the excess of the said liquid phase is returned to the suspension.

5. An apparatus for sampling a liquid phase from a suspension of solid particles in said liquid phase, comprising an enclosed sampling chamber (12) having a porous wall (3), a movable wall (7) capable of sealable movement allowing the volume of said chamber to change, and a discharge orifice (14) from said chamber allowing the liquid phase contained in said chamber to be passed externally into a discharge tube for analysis.

6. An apparatus according to Claim 5, characterised in that the mean diameter of the pores of the porous wall (3) is smaller than or equal to the largest diameter of the smallests particles of the suspension which are at most 0.5% by weight of the total weight of the particles.

7. An apparatus according to Claim 5 or 6, characterised in that the sampling chamber (12) is a tube comprising the porous wall (3), a non-porous side wall (5) and the movable wall (7) which is a piston sealingly movable in said tube.

8. An apparatus according to Claim 7, characterised in that the discharge orifice (14) is located on the front face (31) of the piston (7) and is connected by an internal tube (6) in the piston (7) to the discharge tube.

9. An apparatus according to Claim 7 or 8, characterised in that the piston (7) is actuated by a rod (8) and drive means (32).

10. An apparatus according to any of Claims 5 to 9, characterised in that the discharge tube is connected to an analysis equipment.

11. An apparatus according to Claim 10, characterised in that the analysis equipment is a gas-phase chromatograph.

12. An apparatus according to any of Claims 5 to 11, characterised in that the material forming the porous wall (3) is selected amongst polymeric materials, ceramic materials and sintered metal, preferably a stainless steel or bronze.

13. An apparatus according to any of Claims 7 to 12, characterised in that the piston (7) is equipped with a sealing device (20) and the apparatus comprises an auxiliary chamber (12a) located inside the tube and defined by the back face of the piston, the non-porous side wall (5) of the tube and a gasket (21) at the end of the tube, the auxiliary chamber (12a) having connecting means (22) to an inlet conduit (26) and to an outlet conduit (27), and also a detector (28) located at the exit of the outlet conduit (27), so that injecting an inert gas via the inlet conduit (26) causes a scavenging of the auxiliary chamber (12a) by the said inert gas which, in the event of a failure of the sealing device (20,), will carry with it the traces of the liquid phase which may be present in the auxiliary chamber (12a) and which can be detected by the detector (28).

14. Use of the process according to any of Claims 1 to 4, or of the apparatus according to any of Claims 5 to 13 in the preparation of chemicals, pharmaceutical products, fermentation products, food products, solid catalysts preferably of the Ziegler-Natta type.

FIG.1

FIG.2

*FIG.3*

*FIG.4*

*FIG.6*

FIG.5